# EUROPÄISCHE PATENTANMELDUNG

(11) **EP 2 290 234 A2**
(43) Veröffentlichungstag der Anmeldung: **02.03.2011**
(21) Anmeldenummer: 10183775.5
(22) Anmeldetag: 22.09.2004
(51) Int. Cl.: F03D 9/00, H02J 3/38

(54) **Verfahren zum Betreiben einer Windenergieanlage während einer Störung im Netz**

(30) Priorität: 23.09.2003 EP 03021439
(62) Teilanmeldung aus: 04765486.8
(71) Anmelder: Wobben, Aloys, 26607 Aurich (DE)
(72) Erfinder: Wobben, Aloys, 26607 Aurich (DE)
(74) Vertreter: Eisenführ, Speiser & Partner

(57) **Zusammenfassung**

Es wird ein Verfahren zum Betreiben einer Windenergieanlage vorgesehen. Die Windenergieanlage gibt bei ersten Betriebsbedingungen unter einem Normalbetrieb eine erste Leistung an ein angeschlossenes elektrisches Netz ab. Diese erste Leistung ist proportional zur Windgeschwindigkeit. Die Windenergieanlage wird derart gesteuert, dass sie bei Auftreten einer Störung am angeschlossenen elektrischen Netz bleibt und eine zweite Leistung an das angeschlossene elektrische Netz abgibt, wobei die zweite Leistung geringer ist als die erste Leistung. Nach Beseitigung eines Fehlers wird die abgegebene Leistung der Windenergieanlage im Netz kurzzeitig erhöht, um netzstützend einzugreifen. Die kurzzeitig erhöhte Leistungsabgabe wird durch eine entsprechende Steuerung eines Gleichspannungszwischenkreises bzw. Chopppers bewirkt.

## Beschreibung

Die vorliegende Erfindung betrifft ein Verfahren zum Betreiben einer Windenergieanlage während einer Störung im Netz sowie eine entsprechende Windenergieanlage.

Da sich das elektrische Netz, an dem Windenergieanlagen angeschlossen sind, nicht immer konstant verhält, sondern auch Fehler aufweisen kann, wurden einige Verfahren zum Steuern von Windenergieanlagen entwickelt, welche netzstützende Eigenschaften aufweisen.

Es ist Aufgabe der vorliegenden Erfindung, netzstützende Verfahren zum Betreiben von Windenergieanlagen zu verbessern.

Diese Aufgabe wird durch ein Verfahren zum Betreiben einer Windenergieanlage gemäß Anspruch 1 gelöst.

Somit wird ein Verfahren zum Betreiben einer Windenergieanlage vorgesehen. Die Windenergieanlage gibt bei ersten Betriebsbedingungen unter einem Normalbetrieb eine erste Leistung an ein angeschlossenes elektrisches Netz ab. Diese erste Leistung ist proportional zur Windgeschwindigkeit. Die Windenergieanlage wird derart gesteuert, dass sie bei Auftreten einer Störung am angeschlossenen elektrischen Netz bleibt und eine zweite Leistung an das angeschlossene elektrische Netz abgibt, wobei die zweite Leistung geringer ist als die erste Leistung. Nach Beseitigung eines Fehlers wird die abgegebene Leistung der Windenergieanlage im Netz kurzzeitig erhöht, um netzstützend einzugreifen. Die kurzzeitig erhöhte Leistungsabgabe wird durch eine entsprechende Steuerung eines Gleichspannungszwischenkreises bzw. Chopppers bewirkt.

Somit kann eine Windenergieanlage derart gesteuert werden, dass nach der Beendigung bzw. Beseitigung einer Störung die Windenergieanlage netzstützend eingreift und kurzfristig eine erhöhte Leistung in das angeschlossene elektrische Netz einspeist.

Gemäß einer Ausgestaltung der Erfindung weist die Windenergieanlage einen Zwischenspeicher auf, und der erhöhte Wert der dritten Leistung wird durch eine Steuerung des Zwischenspeichers erhalten. Somit stellt die Windenergieanlage eine höhere Leistung kurzzeitig nach Beendigung der Störung bereit, welche höher ist als diejenige Leistung, welche unter Normalbetrieb bei den gegebenen Betriebsbedingungen erhalten wird.

Die Erfindung betrifft ebenfalls eine Windenergieanlage zum Abgeben von Leistung an ein angeschlossenes elektrisches Netz. Die Energieanlage weist eine Steuereinheit zum Steuern der Windenergieanlage auf. Bei ersten Betriebsbedingungen wird unter Normalbetrieb eine erste Leistung an das elektrische Netz abgegeben, welche proportional zur Windgeschwindigkeit ist. Beim Auftreten einer Störung wird eine zweite Leistung abgegeben, welche geringer als die erste Leistung ist. Nach Beendigung bzw. bei Beendigung der Störung wird unter den ersten Betriebsbedingungen eine dritte Leistung abgegeben, welche deutlich höher als die erste Leistung ist.

Somit ist sowohl die zweite als auch die dritte Leistung unproportional zur Windgeschwindigkeit, während die erste Leistung proportional zur Windgeschwindigkeit ist.

Weitere Ausgestaltungen der Erfindung sind Gegenstand der Unteransprüche.

Die Erfindung beruht auf dem Gedanken, die abgegebene Leistung einer Windenergieanlage nach Beseitigung eines Fehlers im Netz kurzzeitig zu erhöhen, um somit netzstützend einzugreifen. Diese kurzzeitig erhöhte Leistungsabgabe wird beispielsweise durch eine entsprechende Steuerung des Gleichspannungszwischenkreises bzw. Choppers bewirkt. Im Normalbetrieb gibt eine Windenergieanlage unter den entsprechenden Betriebsbedingungen eine erste Leistung an ein Netz ab. Beim Auftreten einer Störung im Netz wird die abgegebene Leistung verringert, und beim Beseitigen der Störung wird kurzzeitig eine erhöhte Leistung abgegeben. Dabei ist diese kurzzeitig erhöhte Leistung deutlich höher als die abgegebene Leistung unter den gegebenen Betriebsbedingungen, d. h. nach einem Beseitigen eines Fehlers wird kurzzeitig deutlich mehr Leistung abgegeben als im Normalbetrieb unter den Betriebsbedingungen erfolgt.

Nachfolgend wird die Erfindung anhand der Ausführungsbeispiele und der beigefügten Zeichnung näher beschrieben.
- Fig. 1: zeigt ein Energienetzwerk mit einigen Energieerzeugungseinheiten,
- Fig. 2: zeigt einen Spannungseinbruch in einem System nach Fig. 1 aufgrund eines Fehlers,
- Fig. 3: zeigt ein Spannungsprofil nach einer Beseitigung eines Fehlers in einem System nach Fig. 1,
- Fig. 4: zeigt den grundlegenden Aufbau einer erfindungsgemäßen Windener- gieanlage,
- Fig. 5: zeigt den grundlegenden Aufbau eines Testsystems,
- Fig. 6 bis 9: zeigen Messergebnisse für das Testsystem gemäß Fig. 5,
- Fig. 10 bis 13: zeigen weitere Testergebnisse für das System gemäß Fig. 4,
- Fig. 14 und 15: stellen analytische Resultate des Systems gemäß Fig. 1 dar, und
- Fig. 16 und 17: stellen weitere analytische Ergebnisse dar.

Der Begriff "Integration von eingebetteter Erzeugung" bezieht sich nachfolgend auf die Kapazität von in einem Teil eines Energiesystems integrierten Energieeinheiten, welche die von einem anderen Teil des Systems gelieferte Energie übersteigt.

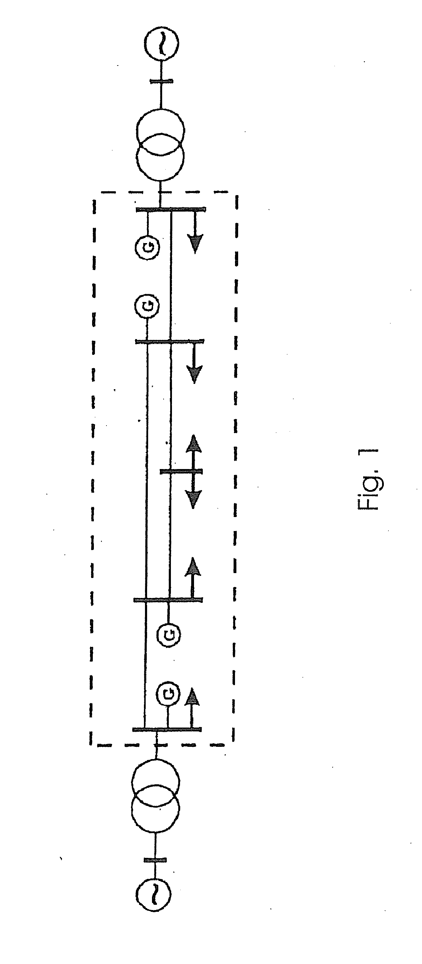

Fig. 1 zeigt einen prinzipiellen Aufbau eines Energieerzeugungsnetzwerkes mit einigen Generatoren G.

Ein "Ride-through" bzw. Durchfahren von eingebetteten Erzeugungseinheiten bedeutet in diesem Zusammenhang, dass die Erzeugungseinheiten am Netz bleiben und während eines Auftretens eines Fehlers im Netz, dem Netz eine Kurzschlussleistung zuführen. Ferner wird Wirk- und Blindleistung dem Netz unmittelbar nach Beseitigung eines Fehlers zugeführt.

Die Gründe für die "Ride-through"-Anforderungen der Übertragungszugangs-codes, welche mehr und mehr durch die Netzbetreiber etabliert werden, stellen die Folgenden dar:

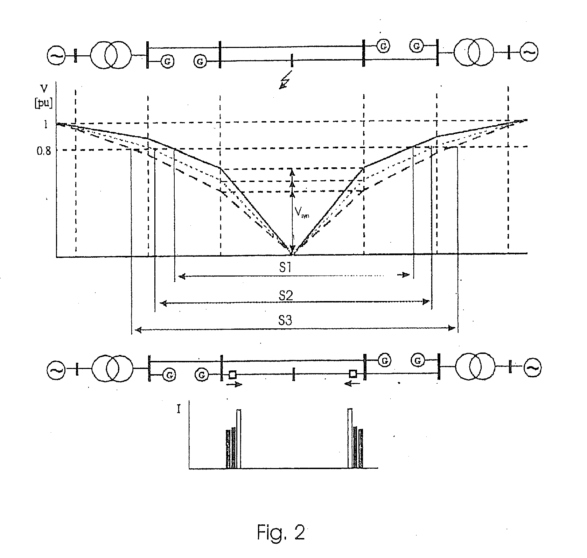

Fig. 2 zeigt einen schematischen Aufbau eines Energieerzeugungsnetzwerkes, ein Diagramm zur Veranschaulichung eines Spannungseinbruches aufgrund eines Fehlers in dem Netzwerk.

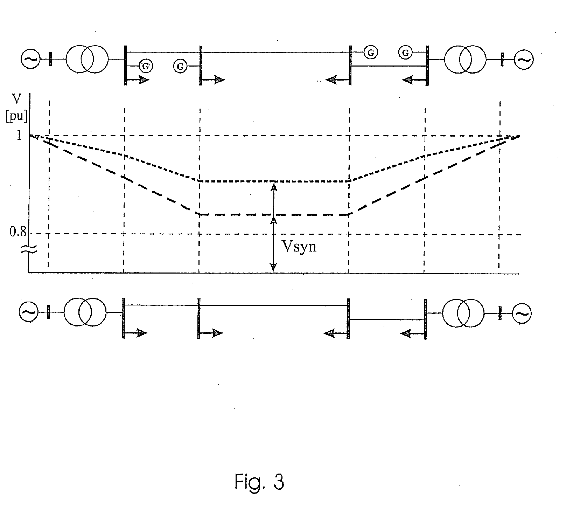

Fig. 3 zeigt einen schematischen Aufbau eines Energieerzeugungssystems sowie der Spannungsprofile vor und nach einer Beseitigung eines Fehlers. Die obere Kurve stellt dabei den Fall dar, dass Generatoren G in dem Netzwerk angeordnet sind, während die untere Kurve den Fall ohne Generatoren darstellt.

In Fig. 2 sind hierbei drei verschiedene Spannungskurven mit einem Spannungseinbruch gezeigt. Die Spannungskurve S3 zeigt den Status quo von Windenergieanlagen zur Zeit. Die Spannungskurve S2 zeigt den Fall von Windenergieanlagen mit einer "Ride-through"-Fähigkeit, und die Spannungskurve S1 zeigt Gasturbinen mit Synchrongeneratoren.

Der Spannungseinbruch-Bereich sollte begrenzt werden, um eine Unterspannung zu vermeiden, welche durch Abtrennen von Erzeugungseinheiten induziert werden (Vermeidung von Ketten-Wirkleistungs-Defiziten). Die Einschwingstabilität sollte aufrechterhalten bzw. verbessert werden, wenn der Fehlerort Teile des Systems entkoppelt (Synchronisationsleistung hängt von den in Quadrat der Spannung V_{syn} in Fig. 2 ab). Ein bestimmter Fehlerstrompegel sollte vorgesehen werden (Aufrechterhalten des Schutzkriteriums und wenn möglich Einstellen von Schutzrelais). Ein zusätzlicher Blindleistungsbedarf durch die Erzeugungseinheiten nach der Beseitigung eines Fehlers sollte vermieden werden (Gefahr des Spannungskollapses und eine Überlastung der Ausrüstung aufgrund des kaskadierenden Blindleistungsbarfs in Fällen einer signifikanten Motorlast). Die Stabilitätsreserve nach einer Beseitigung eines Fehlers sollte verbessert werden (Synchronisierung der Leistung hängt gemäß Fig. 3 von dem Quadrat der Spannung V_{syn} ab).

Die Netzbetreiber der Energieversorgungsnetze müssen große Leistungssysteme während der Normal- und der Fehlerzustände stabil halten. Systemmodelle werden hierbei für verschiedene Zwecke in diesem Kontext angewendet. Das Vorhandensein von geeigneten Modellen ist deshalb essentiell für die Netzbetreiber, insbesondere in Fällen einer großen Integration von einer eingebetteten Erzeugung.

Eine dynamische Systemanalyse wird hierbei verwendet, um elektromechanische Einschwingzustände nach einer Störung des Systems zu bestimmen. Dies erfolgt hauptsächlich im Bereich der Transienten-Stabilitätsanalyse verwendet. Die folgenden Charakteristika für die Entwicklung von entsprechenden Systemmodellen sind:
Berechnung von Strom/Spannung/Leistung/Leistungsfaktor/Drehmoment/ Rotorwinkel in Abhängigkeit der Zeit in einem Zeitbereich von ungefähr 100ms nach Störungen (elektromagnetische Transienten sind verschwunden und die elektromagnetischen Teile des Systems sind quasi im Gleichgewicht mit Ausnahme sehr langsamer elektromagnetischer Moden) bis zu einigen Minuten (elektromechanische Transienten sind verschwunden und die elektromechanischen Teile des Systems befinden sich ebenfalls im Gleichgewicht). Thermische Transienten werden in der Regel nicht durch das Systemmodell abgedeckt.
Annahme von symmetrischen Systembedingungen einschließlich einer Fehlerimpedanz während des angeführten Zeitbereiches.

Anwenden von Gleichgewichtsmodellen für die Ausrüstung des elektrischen Netzes oder im Fall von größeren rotierenden Maschinen (synchronen oder Induktionsmaschinen) und Anwenden von Ordnung reduzierenden dynamischen Modellen.

Somit ergibt sich folgendes für den elektrischen Teil des Systems:
- Mathematische (Phasor) Modelle für die elektrische Ausrüstung mit Ausnahme von größeren Maschinen (für diese Maschinen sind Modelle vorhanden aus mathematischen und differenziellen Gleichungen);
- Phasor mit zeitabhängigen Quadratwurzelwerten (RMS-Werten), Phasenwinkel und manchmal einer zeitabhängigen Systemfrequenz. Während Quadratwurzelwerte und der Phasenwinkel für alle Phasor unterschiedlich sein können, wird eine einzige aber nicht notwendigerweise konstante Frequenz für alle Phasor angenommen;

- Symmetrische Modelle für den elektrischen Teil des Systems, welche durch eine einzige Phase dargestellt werden können (positive Sequenzdarstellung);
- Anwendung von dynamischen Modellen für Ausrüstung, welche die Systembewegung in dem relevanten Zeitbereich steuert (z.B. Spannungs- und Stromcontroller);
- Anwendung von dynamischen Modellen für die Antriebsmaschine (beispielsweise mechanische Trägheit, Drehmomenterzeugung).

Modelle, welche die vorstehend angeführten Charakteristika erfüllen, werden als "RMS-dynamische"- oder "Mid-Term"-Modelle bezeichnet. Modelle dieses Types erlauben eine Darstellung von großen Energiesystemen durch Aufrechterhaltung der meisten relevanten Eigenschaften, welche die dynamischen Moden des Systems überwachen. Somit wird die von den Netzbetreibern verwendete Systemanalysesoftware oftmals auf diesen Ansatz begründet.

Es ist eine allgemein angenommene Anforderung, dass die Systemmodelle einheitlich sein müssen. Somit sollten alle Modelle der verschiedenen Komponenten des Energiesystems vom selben allgemeinen Typ sein.

RMS-dynamische Modelle für die thermische Erzeugungseinheiten, Übertragungseinrichtungen, Schutzsysteme, Netzsteuerequipment etc. sind in der Regel bereits erhältlich und entsprechend implementiert. So sollten die benötigten Modelle für Windenergieanlagen Modelle des RMS-dynamischen Types wie vorstehend angeführt darstellen.

Nachfolgend werden die spezifischen Anforderungen für Modelle von Windenergieanlagen dargelegt.

Zurzeit werden die allgemeinen Bestimmungen zum Verbinden von spezifischen, eingebetteten Erzeugungseinheiten an die Hochspannungsnetze in Deutschland durch den Verband Deutscher Netzbetreiber VDN verfasst. Diese Bestimmungen regeln die technischen Details unter dem UCTE Netzcodes (Übertragung und Verteilung für Einheiten unter dem deutschen Energieeinspeisungsgesetz.

Ferner spezifizieren die deutschen Netzbetreiber die Anforderungen für Windenergieanlagenmodelle für verschiedene Systemanalysezwecke. Für dynamische Fehlerstudien wurden die folgenden Anforderungen bislang genannt:

Das Turbinenmodell wird mit dem positiven Sequenz-RMS-dynamischen Netzmodelles über Phasor für die Klemmspannung und den Strom gekoppelt.

Es gilt für symmetrische Dreiphasen-Fehler mit verbleibenden Klemmspannungen von 0,1...0,8pu, für eine Fehlerbeseitigungszeit von 0,1 bis 3 sec, und für den Zeitbereich von ungefähr 100 ms (nachdem die Transienten verschwunden sind) bis ungefähr 5 sec nach Fehlern (der kritische Bereich für Transientenstabilität). Ein Modell, welches für eine große Anzahl von Turbinen anwendbar ist und somit auf begrenzte Erweiterungen anwendbar ist (soweit hinsichtlich der Genauigkeit akzeptabel). Eine Option zum Spezifizieren eines initialen Betriebspunktes (zu erzeugende Energie). Eine Möglichkeit der Implementierung des Modelles in bereits vorhandene Systemanalysesoftware mit begrenzten Möglichkeiten für anwenderdefinierten Komponenten.

Nachfolgend wird das grundlegende Design und die Funktion der erfindungsgemäßen Windenergieanlagen beschrieben.

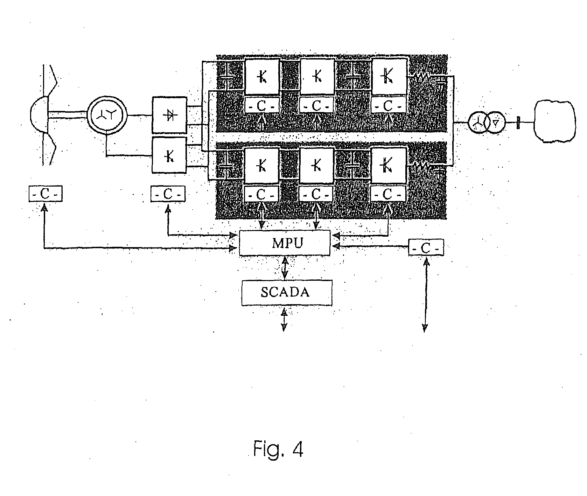

In Fig. 4 ist ein grundlegender Aufbau der erfindungsgemäßen Windenergieanlagen gezeigt. Hierbei wird insbesondere eine Windenergieanlage mit zwei Leistungsmodulen gezeigt.

Die Windenergieanlage ist mit drei pitchgesteuerten Rotorblättern ausgestattet. Der Rotor wird mit einem optimalen Pitchwinkel betrieben, bis die Nenngeschwindigkeit des Motors erreicht wird (mit Ausnahme der Startbedingungen). Wenn die Geschwindigkeit die Nenngeschwindigkeit aufgrund eines zunehmenden Windes oder aufgrund von Verlusten in dem Netzwerk überschreitet (Fehler ride-through), begrenzt die Pitchsteuereinheit die Geschwindigkeit und betreibt die Windenergieanlage unter sicheren Bedingungen.

Der Rotor bewegt direkt - getriebelos - einen Sechs-Phasensynchron-Generator. Der Rotor wird elektrisch erregt. Das Erregungssystem ist mit dem Gleichspannungsbus mit der Ausnahme der Startphase der Windenergieanlage verbunden. Die Erregungssteuerung ist Teil der Steuerung der Windenergieanlage. Der Generator liefert eine variable Spannung an einen Gleichspannungsbus.

Der Gleichspannungs-Wechselspannungszwischenkreis weist Leistungsmodule auf. Die Anzahl der Module hängt von der Bauart der Windenergieanlage ab. Der Gleichspannungszwischenkreis jedes Modules enthält einen Chopper für verschieden Zwecke, Ausgleichskondensatoren, einen IGBT-Wechselrichter und eine Filterausrüstung.

Der (einzelne) Transformator ist ebenfalls Teil des Filterkonzeptes.

Aus der Sicht des Netzwerkes verhalten sich die Leistungsmodule unter normalen Bedingungen und unter sich langsam verändernden Bedingungen wie gesteuerte symmetrische Stromquellen (hinsichtlich der Grundfrequenz der Ströme). Die Quadratwurzel (RMS) der Ströme sowie deren Phasenwinkel werden gesteuert und symmetrierend gehalten.

Der Wechselrichter wird entsprechend den verschiedenen Parametern der Windenergieanlage gesteuert. Da die Steuerung des Wechselrichters einen wesentlichen Teil der Gesamtsteuerung der Windenergieanlage darstellt, ist die Möglichkeit diese Steuerung zu isolieren sehr begrenzt. Dies ist der Grund für eine bestimmte unumgängliche Erweiterung des Modells.

Eine schnelle Steuerung ist beispielsweise für die Leistungselektronikvorrichtungen des Wechselrichters, die Choppers etc. notwendig. Dies wird durch verschiedene verteilte Controller C gemäß Fig. 4 erreicht. Im RMS-Zeitbereich können die meisten der Controller als sich im Gleichgewichtszustand befindlich angesehen werden.

Die Spannungs- und Leistungssteuerung sowie einige andere Steuerungsaufgaben beziehen sich auf die dynamischen Verhältnisse der Windenergieanlage in dem RMS-Zeitbereich. Diese Controller müssen explizit beim Bilden des Modells berücksichtigt werden. Die MPU und die spezifischen Controller-Schnittstelle gemäß Fig. 4 veranschaulichen die Ausrüstung für diesen Steuerungslevel.

Eine Standardkommunikation mit externen Schnittstellen sowie eine Korrektur von Einstellungen, wie beispielsweise die Leistungsbegrenzung Pₘₐₓ, und der Phasenwinkel, werden anhand der SCADA-Einheit erhalten. Dieses System ist nicht zur Verwendung für schnelle Netzsteuerungszwecke vorgesehen. Die schnellen Steuerungsanforderungen verwenden spezifische Controller-Schnittstellen.

Nachfolgend wird das grundsätzliche Verhalten während symmetrierenden Systemfehlern beschrieben.

Das Testsystem zur Entwicklung und zum Testen der Ride-Through-Eigenschaften der erfindungsgemäßen Windenergieanlagen wird durch die folgenden Hauptmerkmale beschrieben. Es wird ein verkleinerter Generator/Gleichrichter/Gleichspannungszwischenkreis/Wechselichter/Filtersystem mit einer ursprünglichen elektronischen Ausrüstung zum Entwickeln und Testen des grundlegenden Design-Konzepts, der Steuerstrategien und des Algorithmus, der Software und der elektronischen Vorrichtungen vorgesehen. Ein flexibles Netzwerk erlaubt verschiedene Arten von SystemKonfigurationen und Fehlern. Eine stark rauschende PCC, bewirkt harte Bedingungen für Messvorrichtungen und Steuerkomponenten.

Eine schwache PCC hinsichtlich der Kurzschlussleistung und Frequenz bewirkt schwierige Betriebsbedingungen für eine Systemsteuerung (Konzept sowie Algorithmus und Software).

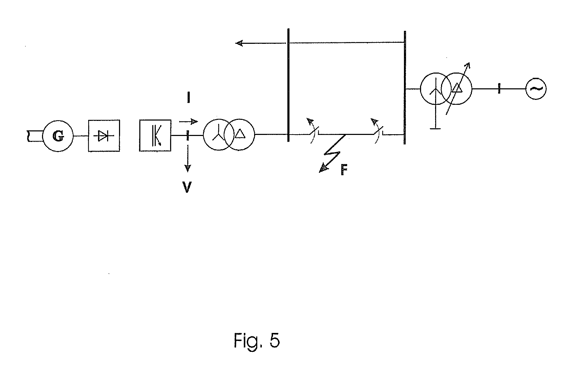

Fig. 5 stellt eine Konfiguration des Testsystems für Ride-through-Tests dar. Der nachfolgende Fehler wurde an der angezeigten Stelle initiiert:

Ein symmetrischer 3-Phasen-Fehler F mit Null Impedanz weist eine Dauer von 770 ms auf.

Die Beseitigung erfolgt durch einen Phasensprung von ungefähr -8°. Das Kurzschluss-Leistungsverhältnis reduziert sich von ungefähr 30 auf 15.

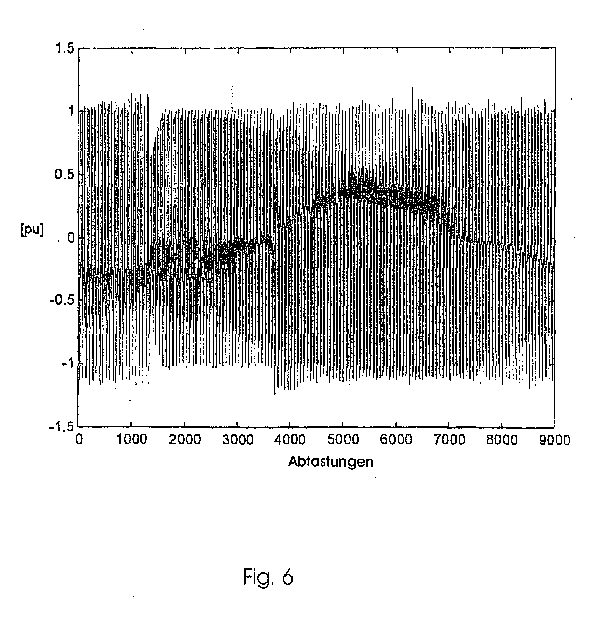

Die Ströme I in dem Wechselrichter wie auch die Klemmspannungen V (Leitung nach Erde) wird an den durch die Pfeile angezeigten Stellen gemessen. Die Ergebnisse dieses Tests sind in den Fig. 6 bis 9 angezeigt. Die Abtastrate wurde mit 3kHz ausgewählt. Vorfilter (anti-aliasing) wurden in diesem Fall nicht angewendet.

In Fig. 6 werden der Strom I und die Spannung V in Abhängigkeit der Abtastung gezeigt. Hierbei tritt ein Fehler ungefähr zwischen 1500 und 3500 Abtastungen auf. Während des Auftretens dieses Fehlers kommt es zu einem Spannungseinbruch.

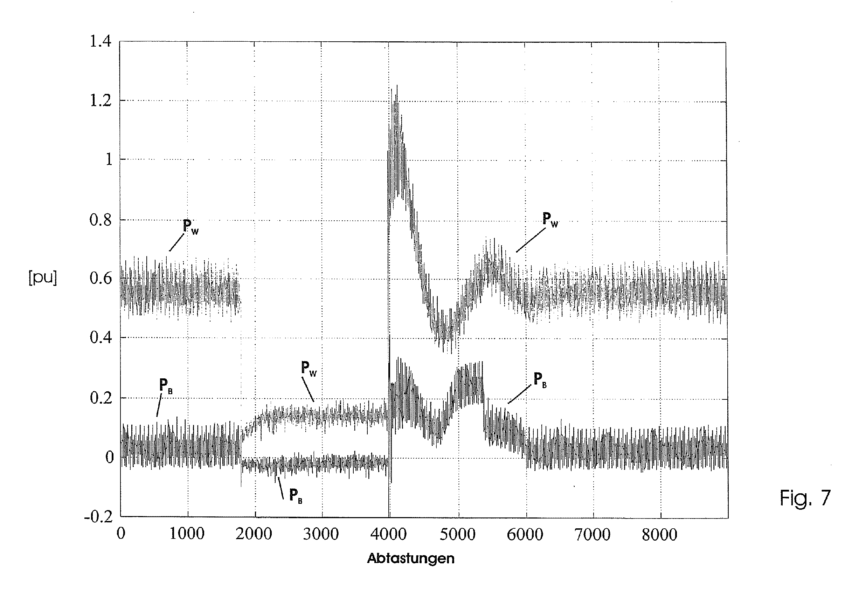

In Fig. 7 werden die Wirkleistung P_{W} und die Blindleistung P_{B} gezeigt. Die Wirkleistung P_{W} stellt dabei die obere Kurve dar, während die untere Kurve die Blindleistung darstellt. Hier tritt ein Fehler ungefähr nach 1800 Abtastungen bis ca. 4000 Abtastungen auf. Während des Auftretens des Fehlers wird die Wirkleistung reduziert, und zwar von ca. 0,6 auf unter 0,2 pu. Nach Beseitigung des Fehlers, d. h. ca. bei 4000 Abtastungen, wird die Wirkleistung kurzzeitig erhöht. Diese Wirkleistungsspitze geht bis auf 1,2 pu. Auch die Blindleistung P_{B} wird nach Beseitigung des Fehlers erhöht und anschließend wieder im Wesentlichen auf Null gefahren.

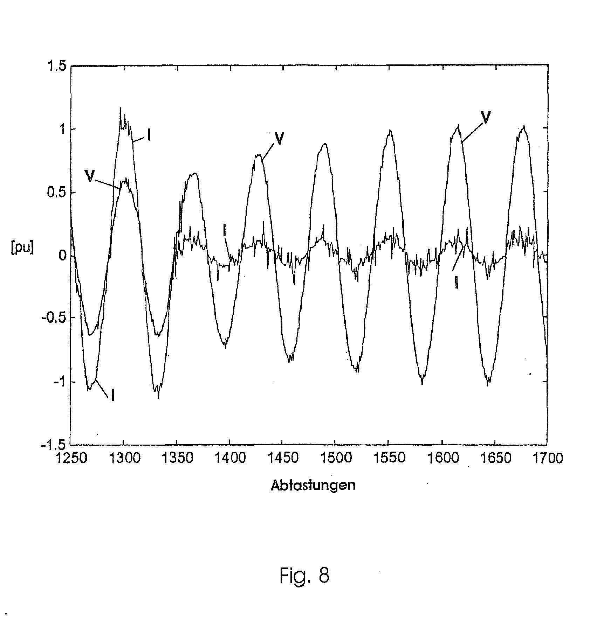

Fig. 8 zeigt einen Ausschnitt der Darstellung von Fig. 6. Hierbei ist zu sehen, dass der Strom nach Auftreten des Fehlers ausschwingt und sich danach wieder einschwingt. Bei dem Spannungsverlauf V verhält es sich jedoch anders, da der Spannungsverlauf stark schwankt.

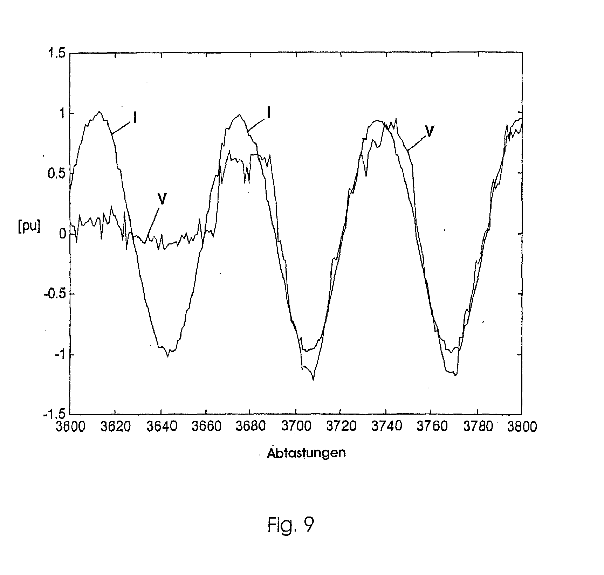

Fig. 9 zeigt einen Ausschnitt aus Fig. 6 nach einer Beseitigung des Fehlers. Hier ist zu sehen, dass der Strom schwingt, während die Spannung anfänglich auf einem Niveau bleibt und dann ca. nach 3660 Abtastungen ebenfalls anfängt zu schwingen.

Die Leistungsmodule der ursprünglichen Größe, wie vorstehend angeführt und in Fig. 4 gezeigt, wurden in den Testeinrichtungen entsprechend getestet. Die durchgeführten Tests wurden zunächst zur Analyse der Beanspruchung aller leistungselektronischen Komponenten während und nach symmetrischen Systemfehlern durchgeführt.

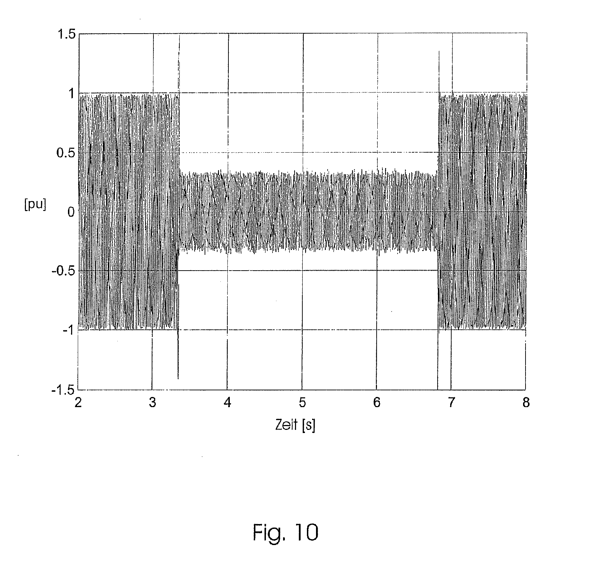

Die entsprechenden Testresultate sind in den Fig. 10 bis 13 gezeigt.

Fig. 10 zeigt die Klemmspannung über die Zeit. Hier tritt ein Fehler bei ca. 3,4 Sekunden auf und dauert bis ca. 6,8 Sekunden. Während des Fehlers kommt es zu dem oben beschriebenen Spannungseinbruch.

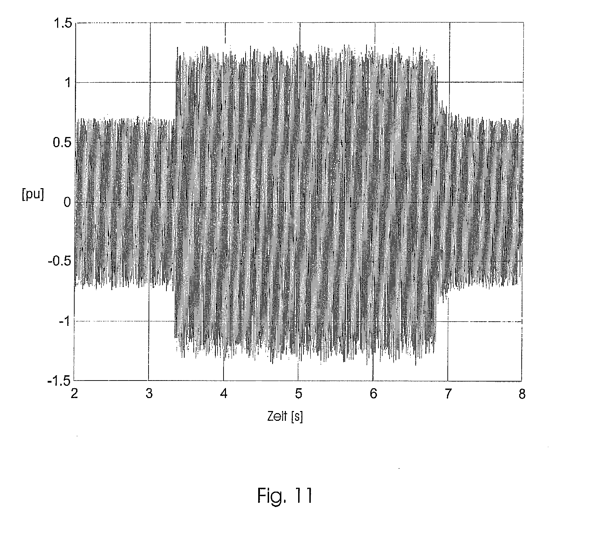

Fig. 11 zeigt den Strom über die Zeit während des Auftretens eines Fehlers. Während es gemäß Fig. 10 zu einem Spannungseinbruch kommt, steigt der Strom während des Fehlers.

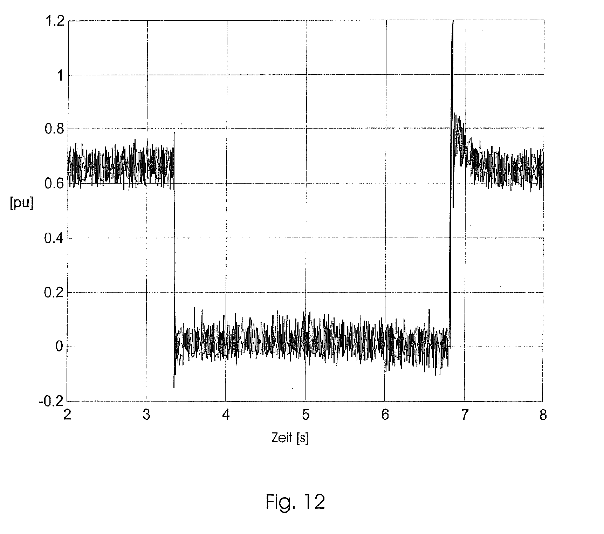

Fig. 12 zeigt die Wirkleistung bezogen auf die Zeit während des Auftretens des Fehlers. Während des Fehlers zwischen 3,4 und 6,8 Sekunden sinkt die Wirkleistung auf Null ab. Nach der Beseitigung des Fehlers kommt es zu einer Spitze in der Wirkleistung.

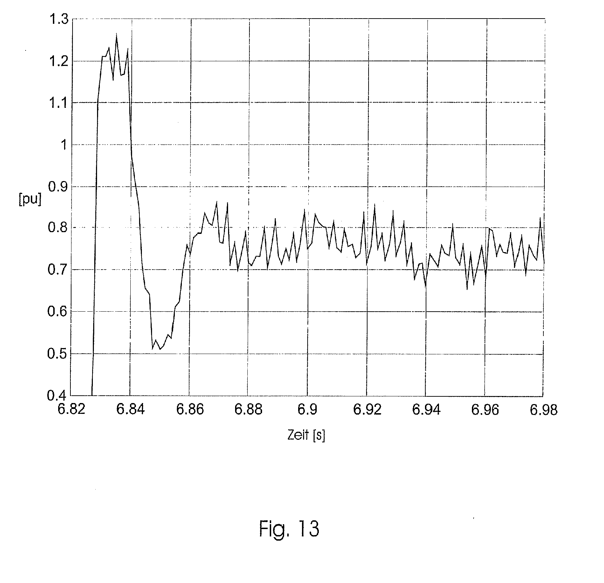

Fig. 13 zeigt einen Ausschnitt aus Fig. 12 zum Zeitpunkt der Beseitigung des Fehlers. Hier ist die Spitze in der Leistung klar zu sehen. Die Leistungsspitze geht bis auf über 1,2 pu. Danach geht die Wirkleistung auf einen Wert zwischen 0,7 und 0,8 pu zurück.

Das Testsystem gemäß Fig. 5 wurde entsprechend dem Systemanalyseansatz modelliert, welches üblicherweise für Transiente als auch für die dynamische Systemanalysen verwendet wird.

Das Modell des Testsystems weist einen 6-Phasen-Generator mit Oberwellenflussverbindung in dem Luftspalt (FEM-basierte Parameteridentifikation), einen Stator-Gleichrichter und Rotorerregungsvorrichtungen einschließlich Controller, einen Gleichspannungszwischenkreis einschließlich aller Leistungselektronikkomponenten (Chopper) und Controller, einen Wechselrichter einschließlich Controller, eine relevante MPU-Funktionalität, einen Filter, einen Transformator einschließlich Vektorgruppe und Erdung, und Leitungen einschließlich Erde (volle Matrixdarstellung).

Dieses Systemmodell ist ein nicht-lineares Full-State-Hybridmodell (durchgehendes/diskretes Gemischmodell) im Zeitbereich. Der kontinuierliche Teil weist Eigenwerte in verschiedenen Zeitskalen auf und muss durch numerische Integrationsverfahren gelöst werden.

Das Ride-through-Szenario, welches für die Ride-through-Test gemäß Fig. 5 angewandt wird, wurde mit diesem Modell analysiert. Aber durch Kürzen der zeitverbrauchenden numerischen Integration wurde die Fehlerdauer auf 100 ms begrenzt. Im Gegensatz zum Wirktestsystem wurde der äquivalente Systemgenerator nicht durch stochastisch gestört, um das Rauschen des Netzes abzubilden.

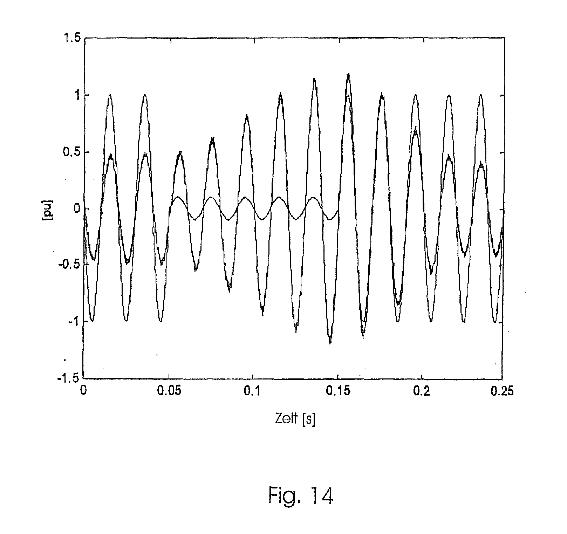

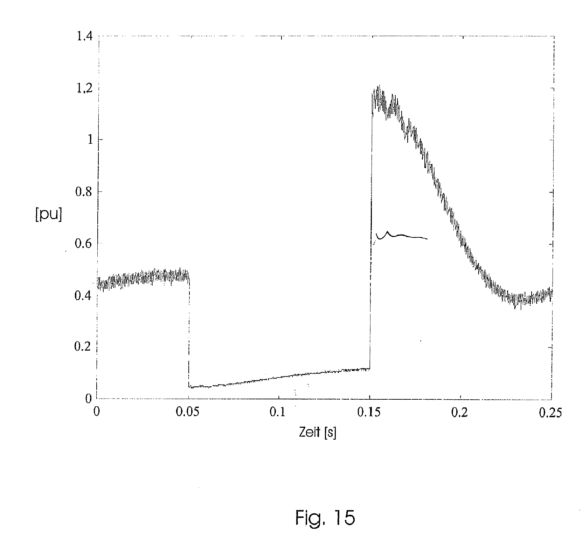

Fig. 14 und 15 zeigen ausgewählte analytische Resultate. Die analytischen Resultate können mit den Messungen von Fig. 6 bis 9 verglichen werden. Bei der Interpretation dieses Vergleiches muss die verkürzte Fehlerdauer und das Rauschen des Netzes mit berücksichtigt werden.

Fig. 15 zeigt die Wirkleistung beim Auftreten eines Fehlers. Auch hier ist der eindeutige Einbruch der Wirkleistung während des Fehlers zu sehen, d. h. zwischen 0,05 und 0,15 Sekunden. Nach Beseitigung des Fehlers bei 0,15 Sekunden kommt es hier ebenfalls zu einer kurzzeitig überhöhten Abgabe von Wirkleistung, wobei diese abgegebene Wirkleistung bis zu 1,2 pu betragen kann.

Wie bereits oben beschrieben, verwenden die Netzbetreiber oftmals Softwarepakete für eine dynamische Systemanalyse basierend auf den RMS-dynamischen Ansätzen. Dieser Typ weist signifikant weniger dynamische Zustände, verglichen mit Transienten-Modellen auf und kann unter Verwendung einer Order-Reduktion entwickelt werden.

Ein RMS-dynamisches Modell, welches alle relevanten strukturellen Aspekte in diesem Bereich berücksichtigt und welches die oben angeführten Kriterien erfüllt, wurde somit für das Testsystem entwickelt.

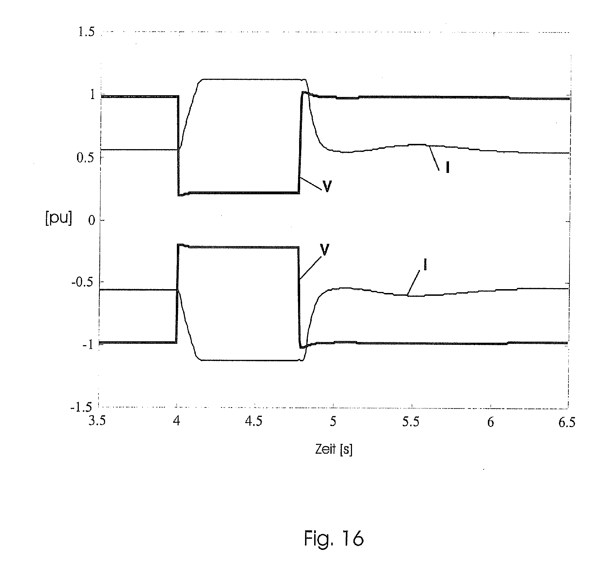

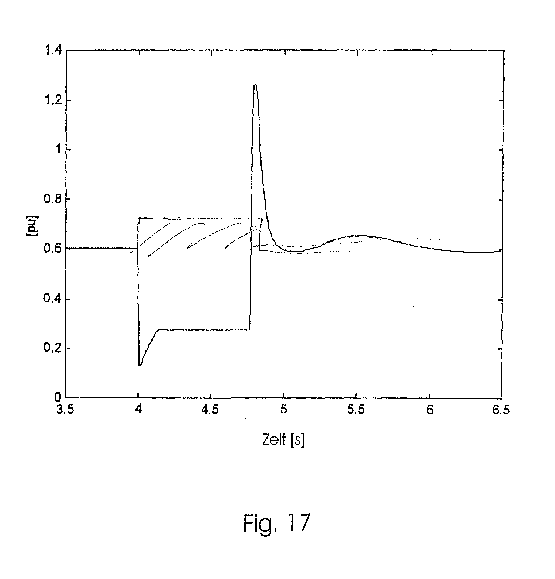

Die Fig. 16 und 17 stellen die entsprechenden Analyseresultate für das gleiche Ride-through-Szenario wie das gemessene Szenario dar. Die Resultate können mit den Messergebnissen gemäß Fig. 6 und 7 und den Ergebnissen aus der Transienten-Analyse gemäß Fig. 14 und 15 verglichen werden.

Fig. 17 stellt die aus den Strom- und Spannungsverläufen gemäß Fig. 16 berechnete Wirkleistung dar. Auch hier ist eine kurzzeitig erhöhte Wirkleistungsabgabe direkt nach Beseitigung des Fehlers zu sehen.

Die erfindungsgemäßen Windenergieanlagen liefern somit eine Ride-through-Möglichkeit, sehen eine Kurzschlussleistung von ungefähr 1,0 bis 1,2 pu auf der genormten Leistungsachse vor und erzeugen Wirk- und Blindleistung unmittelbar nach der Beseitigung eines Fehlers. Die Erzeugung von Wirkleistung erfolgt aufgrund des Verbleibens am Netz für die ganze Zeit ohne Unterbrechung.

Für dynamische Systemanalysezwecke, sind Modelle basierend auf einer positiven Sequenz RMS-Ansatzes an und Transferfunktionsdarstellungen vorgesehen. Für Fälle, welche nicht durch diese Modelle abgedeckt sind (Transienten-Phänomene und phasenungleiche Fehler) sind detaillierte Modelle notwendig.

Die oben beschriebene kurzzeitig deutlich erhöhte Generatorleistung wird im Wesentlichen von dem Generator und dem Zwischenkreis geliefert. Dieser Effekt stellt kein systemimmanentes Verhalten dar, sondern muss durch eine geeignete Steuerung des Zwischenkreises erfolgen.

Bei einer normalen Betriebssituation, in welcher der Generator beispielsweise das 0,6-fache der Nennleistung erzeugt, arbeitet die Synchronmaschine mit einem mit Gleichstrom erregten Polrad, welches ein umlaufendes Feld im Stator erzeugt, das seinerseits Spannungen in den Statorwicklungen induziert. Hierbei läuft das Polrad den im Stator umlaufenden Feld um den Polradwinkel voraus. Bei m Auftreten einer Störung im Netz beispielsweise mit einem Spannungseinbruch, erfolgt eine verringerte Leistungsabgabe ans Netz, was ebenfalls zu einem Einstieg der Zwischenkreisspannung führt. In dem Zwischenkreis ist ein sogenannter Chopper vorgesehen, der die überschüssige Leistung über Lastwiderstände abführt bzw. verheizt, um eine Überdrehzahl des Rotors zu verhindern. Diese Erhöhung der Zwischenkreisspannung wirkt sich jedoch auch auf den Generator aus. Da die Steuerung des Choppers ebenfalls die Höhe der Zwischenkreisspannung bestimmt, hat sie ebenfalls einen gewissen Einfluss auf die Klemmspannung des Generators, so dass diese Spannung bei den erfindungsgemäßen Windenergieanlagen etwas höher als im Normalbetrieb ist.

Dies führt im Generator zu einer geringfügig höheren Rotordrehzahl, welche sich in dem mechanischen System bestehend aus Rotorblatt, Nabe und Polrad widerspiegelt. Gleichzeitig wird jedoch auch der Polradwinkel etwas geringer. Da diese ein etwas geringeres Generatormoment zur Folge hat, wird eine etwas höhere Drehzahl bewirkt.

Wenn das Netz zu den normalen Betriebsbedingungen zurückkehrt, fließt im ersten Moment eine höhere Leistung aufgrund der höheren Zwischenkreisspannung durch die Wechselrichter in das Netz. Da dadurch die Zwischenkreisspannung absinkt, verändert sich auch die Klemmspannung des Generators, der Polradwinkel vergrößert sich wieder, das Generatormoment steigt an und die Drehzahl des mechanischen Systems wird wieder geringfügig kleiner. Für einen relativ kurzen Zeitraum von ungefähr 100-200 Millisekunden gibt der Generator aufgrund der geringfügig höheren Drehzahl eine höhere Leistung ab, bis das mechanische System entsprechend weit abgebremst wird. Die Energie bewirkt die zusätzliche Leistung, die in das Netz abgegeben werden kann.

Die kurzzeitig erhöhte Leistungsabgabe erfolgt somit durch eine gezielte Steuerung des Choppers.

Nachfolgend eine Liste weiterer Ausführungsformen der Erfindung

Ausführungsform 1 Verfahren zum Betreiben einer Windenergieanlage, wobei die Windenergieanlage bei ersten Betriebsbedingungen unter Normalbetrieb eine erste Leistung an ein angeschlossenes elektrisches Netz abgibt, welche proportional zur Windgeschwindigkeit ist, mit dem Schritt:
Steuern der Windenergieanlage derart, dass sie bei Auftreten einer Störung am angeschlossenen elektrischen Netz bleibt und eine zweite Leistung an das angeschlossene elektrische Netz abgibt, welche geringer als die erste Leistung ist, und bei den ersten Betriebsbedingungen eine dritte Leistung kurzzeitig bei Beendigung der Störung an ein angeschlossenes elektrisches Netz abgibt, welche deutlich höher als die erste Leistung ist.

Ausführungsform 2 Verfahren nach Ausführungsform 1, wobei die dritte Leistung eine Kurzschlussleistung darstellt.

Ausführungsform 3 Verfahren nach Ausführungsform 1 oder 2, wobei die Windenergieanlage einen Zwischenspeicher aufweist, und die erhöhte dritte Leistung durch Steuerung des Zwischenspeichers erhalten wird.

Ausführungsform 4 Verfahren nach Ausführungsform 3, wobei die Windenergieanlage einen Gleichspannungszwischenkreis als Zwischenspeicher aufweist, und die erhöhte dritte Leistung durch Steuerung des Gleichspannungszwischenkreis erhalten wird.

Ausführungsform 5 Verfahren nach Ausführungsform 4, wobei der Gleichspannungszwischenkreis einen Chopper aufweist und die erhöhte dritte Leistung durch Steuerung des Choppers in dem Gleichspannungszwischenkreis erhalten wird.

Ausführungsform 6 Verfahren nach Ausführungsform 3, wobei die Rotation des Generators der Windenergieanlage als Zwischenspeicher verwendet wird, und die erhöhte der dritten Leistung durch Steuerung der Rotation erhalten wird.

Ausführungsform 7 Windenergieanlage zum Abgeben von Leistung an ein angeschlossenes elektrisches Netz, insbesondere zur Durchführung des Verfahrens gemäß einer der Ausführungsformen 1 bis 6, mit einer Steuereinheit zum Steuern der Windenergieanlage derart, dass bei ersten Betriebsbedingungen unter Normalbetrieb eine erste Leistung an das angeschlossenes elektrisches Netz abgegeben wird, welche proportional zur Windgeschwindigkeit ist, dass die Windenergieanlage bei Auftreten einer Störung am angeschlossenen elektrischen Netz bleibt und eine zweite Leistung an das angeschlossene elektrische Netz abgibt, welche geringer als die erste Leistung ist, und bei den ersten Betriebsbedingungen eine dritte Leistung kurzzeitig bei Beendigung der Störung an ein angeschlossenes elektrisches Netz abgibt, welche deutlich höher als die erste Leistung ist.

Ausführungsform 8 Windenergieanlage nach Ausführungsform 7, wobei die Windenergieanlage einen Zwischenspeicher aufweist, und die Steuereinheit dazu ausgestaltet ist, die erhöhte dritte Leistung durch Steuerung des Zwischenspeichers zu erhalten.

Ausführungsform 9 Windenergieanlage nach Ausführungsform 8, mit einem Gleichspannungszwischenkreis als Zwischenspeicher, wobei die Steuereinheit dazu ausgestaltet ist, die erhöhte dritte Leistung durch Steuerung des Gleichspannungszwischenkreises zu erhalten.

Ausführungsform 10 Windenergieanlage nach Ausführungsform 9, wobei der Gleichspannungszwischenkreis einen Chopper aufweist und die erhöhte dritte Leistung durch Steuerung des Choppers in dem Gleichspannungszwischenkreis erhalten wird.

Ausführungsform 11 Windenergieanlage nach Ausführungsform 8, wobei die Rotation des Generators der Windenergieanlage als Zwischenspeicher verwendet wird, und die erhöhte dritte Leistung durch Steuerung der Rotation erhalten wird.

## Patentansprüche

1. Verfahren zum Betreiben einer Windenergieanlage, wobei die Windenergieanlage bei ersten Betriebsbedingungen unter Normalbetrieb eine erste Leistung an ein angeschlossenes elektrisches Netz abgibt, wobei diese Leistung proportional zur Windgeschwindigkeit ist und wobei bei Auftreten einer Störung am angeschlossenen elektrischen Netz die Windenergieanlage am Netz bleibt und eine zweite Leistung an das elektrische Netz abgibt, wobei die zweite Leistung geringer ist als die erste Leistung und wobei die abgegebene Leistung der Windenergieanlage nach Beseitigung eines Fehlers im Netz kurzzeitig erhöht wird, um netzstützend einzugreifen, wobei die kurzzeitig erhöhte Leistungsabgabe beispielsweise durch eine entsprechende Steuerung eines Gleichspannungszwischenkreises bzw. Choppers bewirkt wird.

2. Verfahren zum Betreiben einer Windenergieanlage,insbesondere nach Anspruch 1, wobei die Windenergieanlage im Normalbetrieb eine erste Leistung an ein angeschlossenes elektrisches Netz abgibt, wobei die Leistung proportional zur Windgeschwindigkeit ist und wobei die Leistung mit einer vorbestimmten Spannung und einem vorbestimmten Strom abgegeben wird, wobei bei Auftreten einer Störung im angeschlossenen elektrischen Netz die Windenergieanlage am Netz bleibt und dass während des Auftretens einer Störung am angeschlossenen elektrischen Netz es zu einem Spannungseinbruch kommt und während des Fehlers, wenn es zu einem Spannungseinbruch kommt, der Strom auf einen deutlich höheren Wert als vor dem Spannungseinbruch steigt.

3. Verfahren nach Anspruch 1 oder 2,
**dadurch gekennzeichnet, dass** während des Fehlers die Wirkleistung auf Null absinkt.

4. Verfahren nach Anspruch 1, 2 oder 3,
**dadurch gekennzeichnet dass** die Windenergieanlage auch während des Fehlers die Wirkleistung aufgrund des Verbleibens am Netz für die ganze Zeit ohne Unterbrechung abgibt.

5. Verfahren nach einem der vorhergehenden Ansprüche,
**dadurch gekennzeichnet, dass** bei einer normalen Betriebssituation, in welcher der Generator der Windenergieanlage beispielsweise das 0,6-fache der Nennleistung erzeugt, die Synchronmaschine, also der Generator mit einem mit Gleichstrom erregten Polrad arbeitet, welches ein umlaufendes Feld im Stator des Generators erzeugt, das seinerseits Spannungen in den Statorwicklungen des Generators induziert, wobei hierbei das Polrad den im Stator umlaufenden Feld um den Polradwinkel voraus läuft, wobei beim Auftreten einer Störung im Netz, beispielsweise mit einem Spannungseinbruch, eine verringerte Leistungsabgabe an das Netz erfolgt, was ebenfalls zu einem Anstieg der Zwischenkreisspannung führt, wobei in dem Zwischenkreis ein sogenannter Chopper vorgesehen ist, der die überschüssige Leistung über Lastwiderstände abführt bzw. verheizt, um eine Überdrehzahl des Rotors des Generators zu verhindern, wobei diese Erhöhung der Zwischenkreisspannung sich auf den Generator auswirkt, weil die Steuerung des Choppers ebenfalls die Höhe der Zwischenkreisspannung bestimmt und sie ebenfalls einen gewissen Einfluss auf die Klemmspannung des Generators hat, so dass diese Spannung (Klemmspannung) höher ist als im Normalbetrieb der Windenergieanlage, wobei vorzugsweise dies im Generator zu einer geringfügig höheren Rotordrehzahl führt, welche sich in dem mechanischen System, bestehend aus Rotorblatt, Nabe und Polrand widerspiegelt, wobei gleichzeitig jedoch auch der Polradwinkel etwas geringer ist, was ein etwas geringeres Generatormoment zur Folge hat, was eine etwas höhere Drehzahl bewirkt, wobei bevorzugt dann, wenn das Netz zu den normalen Betriebsbedingungen zurückkehrt, im ersten Moment eine höhere Leistung aufgrund der höheren Zwischenkreisspannung durch die Wechselrichter in das Netz fließt, und da **dadurch** die Zwischenkreisspannung absinkt, verändert sich auch die Klemmspannung des Generators, der Polradwinkel vergrößert sich wieder, das Generatormoment steigt an und die Drehzahl des mechanischen Systems wird geringfügig kleiner, wodurch für einen relativ kurzen Zeitraum von ungefähr 100 bis 200 ms der Generator aufgrund der geringfügig höheren Drehzahl eine höhere Leistung abgibt, bis das mechanische System entsprechend weit abgebremst wird.

6. Windenergieanlage zur Durchführung des Verfahrens nach einem der Ansprüche 1 bis 5, wobei die Windenergieanlage einen Gleichspannungszwischenkreis und/oder Chopper aufweist, um **dadurch** Leistung des Generators der Windenergieanlage aufzunehmen, die nicht unmittelbar nach ihrer Erzeugung in das Netz eingespeist wird.
